# EUROPÄISCHE PATENTSCHRIFT

(11) **EP 2 394 544 B1**
(45) Veröffentlichungstag und Bekanntmachung des Hinweises auf die Patenterteilung: **21.05.2014**
(21) Anmeldenummer: 11169526.8
(22) Anmeldetag: 10.06.2011
(51) Int. Cl.: A47J 43/07, A47J 43/044, A47J 43/08

(54) **Handküchengerät mit Schutzabdeckung**
Hand-held kitchen appliance with protective covering
Appareil de cuisine manuel doté d'un recouvrement de protection

(30) Priorität: 10.06.2010 DE 102010029959
(43) Veröffentlichungstag der Anmeldung: 14.12.2011
(73) Patentinhaber: BSH Bosch und Siemens Hausgeräte GmbH, 81739 München (DE)
(72) Erfinder: Anic, Dino, 10000 Zagreb (HR); Antonic, Krunoslav, 3331 Nazarje (SI); Duhovnik, Joze, 1215 Medvode (SI); Marolt, Jernej, 4000 Kranj (SI); Pavkovic, Neven, 3331 Nazarje (SI); Penca, Jure, 1230 Domzale (SI); Povse, Gregor, 3327 Smartno ob Paki (SI); Sofalvi, Janos, 1221 Budapest (HU); Szabo, Joszef, 7332 Magyaregregy (HU); Tadej, Tea, 51000 Rijeka (HR); Vukasinovic, Nikola, 1231 Ljubljana (SI)

(56) Entgegenhaltungen:
- EP-A1- 0 956 797
- EP-A1- 1 967 105
- WO-A1-2004/112558
- DE-A1- 10 002 935
- DE-A1- 19 504 638
- DE-A1- 19 750 813
- DE-B- 1 174 949
- US-A- 4 405 998
- US-A1- 2008 198 693

## Beschreibung

### Hintergrund der Erfindung

Die Erfindung betrifft ein Handküchengerät, insbesondere einen Stabmixer, mit mindestens einem Werkzeug zur Nahrungsmittelbearbeitung.

### Stand der Technik

Ein als Stabmixer ausgebildetes Haushaltsgerät wird in dem Gebrauchsmuster DE 89 03 799 U1 offenbart. Das Rührgerät weist einen zylindrisch geformten, üblicherweise aus Kunststoff spritzgegossenen Handgriff auf, aus welchem koaxial ein Wellenschaft auskragt. Der Wellenschaft ist an seinem freien Ende mit einem glockenförmigen, vom Wellenschaft wegweisend offenen Fußteil ausgestattet, in welches ein Werkzeug zur rührenden oder schneidenden Bearbeitung von Behandlungsgut, beispielsweise Teig, Gemüse oder dergleichen, einsetzbar ist. Das Werkzeug wird bei Bedarf durch eine im Wellenschaft angeordnete Antriebswelle in Drehung versetzt. Der Wellenschaft ist seinerseits mit einer elektromotorischen Antriebseinrichtung verbunden.

Aus dem Gebrauchsmuster DE 93 01 408 U1 ist bekannt, ein Handrührgerät mit einem aus Klarsichtfolie bestehenden Spritzschutz auszustatten, welcher in der Mitte Ausnehmungen für die Durchführung der Rührwerkzeuge aufweist und randseitig auf dem Aufnahmegefäß aufliegt. Eine ausreichende Luftzufuhr soll durch Luftlöcher in der Klarsichtfolie gewährleistet werden.

In der Patentschrift DE 100 33 032 C1 wird ein das Werkzeug abschirmendes Fußteil für einen Stabmixer beschrieben, das an seinem unteren Rand wellenartig ausgebildet und an seinen Mantelflächen mit Ausströmöffnungen ausgestattet ist. Durch diese Ausbildung sollen unbeabsichtigtes Spritzen durch aus dem Aufnahmegefäß herausgeschleudertes Behandlungsgut sowie ein Festsaugen des Stabmixers am Boden des Behandlungsgefäßes vermieden werden.

In der Offenlegungsschrift US 200810198693 A1 wird ein Mischarm eines Küchengeräts beschrieben, der einen rohrförmigen Körper mit einer darin angeordneten drehbaren Welle umfasst. Die drehbare Welle weist am einen Ende eine Verbindung für eine Antriebseinheit auf und am anderen Ende eine Klinge. Die drehbare Welle ist innerhalb des rohrförmigen Körpers beweglich angeordnet, so dass sie in eine zurückgezogene Position zum Betrieb und in eine vorgeschobene Position zur Reinigung der Klinge bzw. eine weiter vorgeschobene Position zum Wechseln der Klinge gebracht werden kann. An seinem unteren Ende ist der rohrförmige Körper verbreitert und bildet einen Korb als peripheren Schutz aus, der die Klinge in der zurückgezogenen Position umgibt.

Die deutsche Offenlegungsschrift DE 1 174 949 betrifft ein Gerät zum Zerkleinern von Früchten u., dgl., das eine Welle aufweist, die mit ihrem hinteren Ende mit einer Abtriebswelle eines Elektroquirls verkuppelbar ist und auf deren vorderem Ende fest ein Messerstern sitzt. Auf dem Vorderteil der Welle sitzt sowohl drehbar als auch axial verschiebbar eine das Messerkreuz umgebende Kappe. Die Kappe wird beim Arbeiten mit dem Gerät mit ihrem Rand gegen den Boden des Gefäßes gedrückt, in dem sich das zu zerkleinernde Gut befindet. Hierdurch steht die Kappe zwar nicht vollkommen fest, führt jedoch eine im Verhältnis zur Umlaufzahl des Messersterns langsame Drehbewegung aus, wodurch ein Mitnehmen des zu zerkleinernden Guts durch den Messerstern verhindert wird.

Gemäß der deutschen Offenlegungsschrift DE 195 04 638 A1 weist ein Stabmixer ein Wellengehäuse auf, innerhalb dessen eine Arbeitswelle verläuft, an deren Ende ein Rührwerkzeug oder Zerkleinerungsmesser befestigt ist. Am Ende des Wellengehäuses befindet sich eine Gehäuseglocke, innerhalb derer sich das Rührwerkzeug oder Zerkleinerungsmesser frei bewegen kann.

Die deutsche Offenlegungsschrift DE 197 50 813 A1 offenbart einen Stabmixer, der eine von einem Antriebsmotor angetriebene Arbeitswelle aufweist, die in einem Wellengehäuse verläuft und an deren Abtriebsende ein Arbeitsteil befestigt ist. Das Wellengehäuse geht im Bereich des Abtriebsendes in eine Abschirmung über, die das Arbeitsteil radial umschließt. Zwei ineinander greifende, hülsenförmige Teile sowie ein aus einem elastischen Material bestehendes Zwischenteil ermöglichen eine axiale Verschiebung des Arbeitsteils relativ zum Öffnungsrand der Abschirmung, wenn auf den Öffnungsrand der Abschirmung eine Kraft ausgeübt wird. Gemäß DE 100 02 935 A1 ist ein Spritzschutz mit Hilfe eines Anbausatzes nachträglich an einem Pürierstab anbringbar.

Die üblichen Handküchengeräte haben sich grundsätzlich bewährt.. Sie weisen jedoch insbesondere beim Verarbeiten von unterschiedlichen Nahrungsmitteln Nachteile auf, und weiter können diese nicht flexibel für unterschiedliche Aufgaben eingesetzt werden, da die herkömmlichen Geräte durch die Ausgestaltung ihrer Werkzeuge lediglich eingeschränkte Nahrungsverarbeitungsmöglichkeiten bieten.

### Der Erfindung zugrundeliegende Aufgabe

Der Erfindung liegt die Aufgabe zugrunde, ein Handküchengerät bereitzustellen, das eine flexible Zubereitung von Nahrungsmitteln gewährleistet.

### Erfindungsgemäße Lösung

Die der Erfindung zugrunde liegende Aufgabe wird durch ein Handküchengerät gemäß der Merkmalskombination des Anspruchs 1 gelöst. Es wird ein Handküchengerät, insbesondere Stabmixer, mit mindestens einem Werkzeug zur Nahrungsmittelbearbeitung bereitgestellt, wobei das Werkzeug einen Antriebsschaft aufweist, der mit einem Motor des Handküchengeräts wirkverbindbar ist, wobei am Antriebsschaft eine verschiebbare Schutzabdeckung für das Werkzeug angeordnet ist.

Die verschiebbare Schutzabdeckung weist den Vorteil auf, dass das Handküchengerät, insbesondere Stabmixer, unterschiedliche Aufgabe erledigen kann. So kann dieses als Stabmixer eingesetzt werden, falls die Abdeckung direkt oberhalb des rotierenden Messers des Stabmixers fixiert ist und als Chopper dienen; falls die Schutzabdeckung entlang des Antriebsschaftes nach oben in Richtung des Griffs des Stabmixers verschoben und fixiert wurde.

Ferner kann die Höhe des Arbeitsbehälters einen variablen Wert aufweisen, da die Schutzabdeckung an die Höhe des Behälters entsprechend angepasst werden kann. D.h. es können mehrere Behälter unterschiedlicher Höhe benutzt werden, und der Stabmixer kann in jedem der Behälter als Zerkleinerer bzw. Chopper Einsatz finden. Somit kann die Schutzabdeckung als Schutzschild und gleichzeitig auch als Schutzdeckel dienen.

### Bevorzugte Ausgestaltung der Erfindung

Vorteilhafte Aus- oder Weiterbildungen, welche einzeln oder in Kombination miteinander eingesetzt werden können, sind Gegenstand der abhängigen Ansprüche.

Es ist bevorzugt, dass die Schutzabdeckung entlang einer Achse des Antriebsschaftes verschiebbar angeordnet ist. Somit kann eine intuitive und sichere Bedienung des Handküchengeräts gewährleisten werden. Die Schutzabdeckung bzw. deren Grundfläche verläuft senkrecht auf die Achse des Antriebsschaftes, und folglich kann die verschiebbare Abdeckung an die Höhe des Arbeitsbehälters, in welchem das Mischgut verarbeitet wird, angepasst werden.

Erfindungsgemäß ist die Schutzabdeckung scheibenförmig oder diskusförmig mit einer Öffnung ausgebildet, durch welche der Antriebsschaft verläuft. Diese Ausgestaltung weist ein ansprechendes Äußeres und ferner wirkt sich die Scheibenform positiv auf das Arbeitsergebnis, da beispielsweise das Nahrungsmittel schneller verarbeitet werden kann. Weiter weist diese Ausgestaltung keine Kanten oder Ecken auf, so dass die Arbeitsbehälter nicht beschädigt oder zerkratzt werden können.

Die Öffnung der Schutzabdeckung weist mindestens einen Vorsprung auf, wobei der mindestens eine Vorsprung mit einem Führungsmittel des Antriebsschaftes zusammenwirkt. Somit kann die Schutzabdeckung sicher in eine gewünschte Betriebsposition geführt und ggf. fixiert werden.

Zweckmäßigerweise ist das Führungsmittel des Antriebsschaftes als Führungsnut ausgebildet ist und der Vorsprung als Gleitstück ausgebildet. Diese Mittel sind technisch leicht herstellbar und sind sehr robust in der Anwendung, wo relativ hohe Kräfte auftreten können.

Die Schutzabdeckung kann in mindestens eine Betriebsposition entlang des Antriebsschaftes fixiert werden. Folglich kann die Schutzabdeckung an die Höhe des Arbeitsbehälters entsprechend verschoben und fixiert werden. Folglich kann diese einen optimalen Spritzschutz gewährleisten, der unabhängig vom gewählten Behälter ist.

Zweckmäßigerweise ist der Abtrieb des Motors mit einer Koppelstelle für das Werkzeug verbindbar ist. Somit können unterschiedliche Werkzeuge vorgesehen werden.

Die oben offenbarten Merkmale können sowohl einzeln als auch in beliebiger Kombination für die Verwirklichung der Erfindung in ihren verschiedenen Ausgestaltungen von Bedeutung sein.

### Kurzbeschreibung der Figuren

Die Erfindung wird im Folgenden anhand schematischer Zeichnungen an mehreren Ausführungsbeispielen mit weiteren Einzelheiten näher erläutert.

Es zeigen:
- Fig. 1:: eine perspektivische Ansicht eines Handküchengeräts gemäß vorliegender Erfindung;
- Fig. 2a:: das Werkzeug des Handküchengeräts in einer ersten Betriebsposition;
- Fig. 2b:: das Werkzeug des Handküchengeräts in einer zweiten Betriebsposition;
- Fig. 3:: die Fixierung der Abdeckung gemäß einer Ausführungsform der vorliegenden Erfindung;
- Fig. 4:: eine vereinfachte Explosionsansicht des Hauptkörpers des Handküchengeräts gemäß der vorliegenden Erfindung.

### Ausführliche Beschreibung der Erfindung

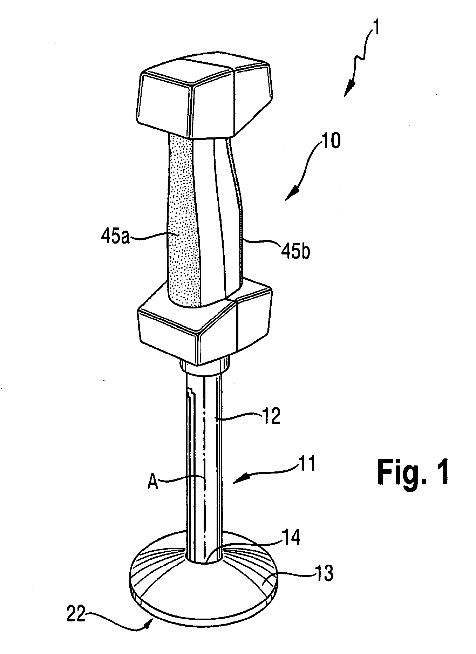

Fig. 1 zeigt ein Handküchengerät gemäß vorliegender Erfindung, das als Stabmixer (10) ausgebildet ist. Der Stabmixer weist einen Hauptkörper aus Kunststoff auf, der im Wesentlichen aus zwei Gehäuseteilen 45a, 45b ausgebildet ist. Innerhalb des Hauptkörpers werden die Hauptkomponenten, wie Antriebsmotor 40, Steuereinheit 47 und 48, Akkumulatoren 46 etc., des Stabmixers 10 angeordnet. Falls der Stabmixer 10 nicht als akkubetreibbares Handküchengerät 1 ausgebildet ist, sollte eine geeignete Spannungsversorgung mittels eines Stromkabels vorgesehen werden.

Der Antriebsmotor 40 weist eine Antriebsachse A auf, die mit der Achse des Antriebsschaftes 12 übereinstimmt. Der Antriebsschaft 12 ist Teil eines Werkzeugs 11, welches mit dem Antriebsmotor in Wirkverbindung steht, um von diesem angetrieben werden zu können. Am unteren Ende des Werkzeugs 11 ist eine Schutzabdeckung 13 mit einer Öffnung 14 vorgesehen, durch welche der Antriebsschaft 12 des Werkzeugs 11 verschiebbar geführt ist. Die Schutzabdeckung 13 weist eine scheibenförmige bzw. diskusförmige Form auf. Unterhalb der Schutzabdeckung 13 wird beispielsweise ein Messerwerkzeug 22 mittels des Antriebsmotors in eine Rotationsbewegung zum Bearbeiten von Nahrungsmitteln versetzt. Dazu weist der Antriebsschaft 12 eine Antriebswelle auf, die den Abtrieb des Motors zum unteren Ende des Antriebsschaftes 12 ableitet, damit das Messerwerkzeug 22 angetrieben werden kann.

Die Schutzabdeckung 13 ist erfindungsgemäß entlang des Antriebsschaftes 12 verschiebbar geführt bzw. gelagert. Die scheibenförmige Schutzabdeckung 13 spannt eine Grundfläche 13a auf, die im Wesentlichen in einem 90° zum Antriebsschaft 12 und zur Achse A verläuft. Im Folgenden wird die Funktionsweise der Schutzabdeckung 13 genauer erläutert.

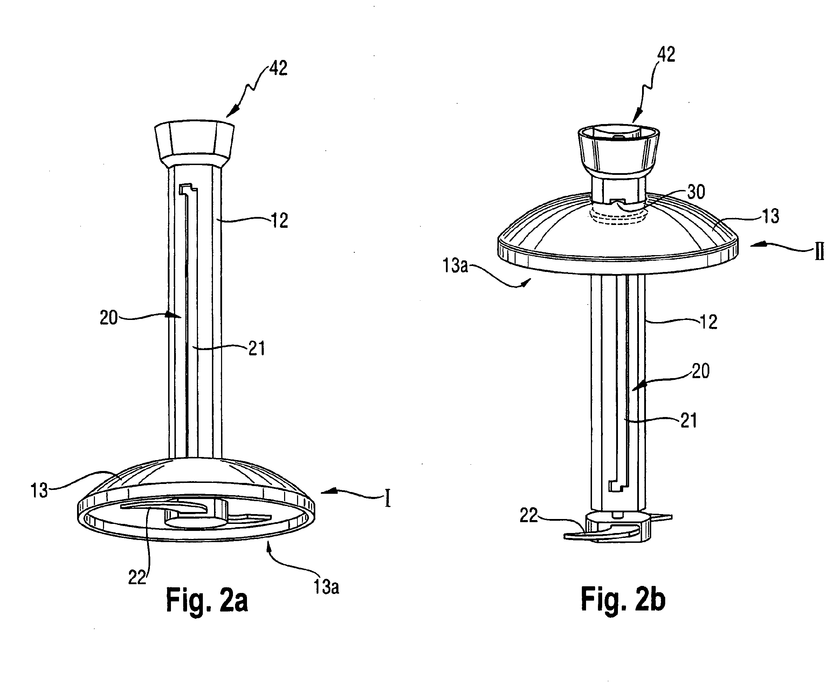

Die Fig. 2a und 2b zeigen das Werkzeug samt Schutzabdeckung gemäß der Erfindung in zwei Betriebspositionen. In einer ersten Betriebsposition I (Fig. 2a) ist die Schutzabdeckung am unteren Ende des Antriebsschaftes 12 des Werkzeugs 11 fixiert, und das Handküchengerät kann zur Nahrungsmittelverarbeitung wie ein Stabmixer 10 verwendet werden.

Die Schutzabdeckung 13 ist starr ausgebildet und weist eine scheibenförmige oder diskusförmige Gestalt auf. Die Grundfläche 13a der Schutzabdeckung 13 weist ein 90° Winkel zum Antriebsschaft 12 und zur Achse A auf. Parallel zur Grundfläche oder sogar mit der Grundfläche übereinstimmend wird ein Messerwerkzeug 22 vom Antriebsmotor 40 angetrieben. In der ersten Betriebsposition I gemäß Fig. 2a ist die Schutzabdeckung 13 geeignet, um das rotierende Werkzeug 22 abzudecken, damit das Handküchengerät als Stabmixer 10 eingesetzt werden kann.

Am Antriebsschaft 12 ist ein als Nut 21 ausgebildetes Führungsmittel 20 implementiert, welches mit einem geeigneten Gegenmittel 30 an der Schutzabdeckung 13 zusammenwirkt. Dazu ist das Gegenmittel 30 an der Schutzabdeckung vorzugsweise als Vorsprung 30 ausgebildet, der aus dem Umfang der Öffnung 14 der Schutzabdeckung 13 herausragt. Die Öffnung 14 der Schutzabdeckung 13 ist dergestalt ausgebildet, dass in beiden Betriebspositionen I bzw. II eine fluiddichte Verbindung zwischen Schaft 12 und Umfang der Öffnung 14 gewährleistet wird. Dazu kann beispielsweise ein Dichtring oder eine angespritzte Dichtlippe entlang der Öffnung 14 vorgesehen werden. Auch denkbar ist, dass oberhalb der Schutzabdeckung 13 ein Spritzschutz implementiert ist, der ebenfalls am Schaft 12 verschiebbar geführt ist, um insbesondere die Dichtigkeit der Öffnung 14 in allen möglichen Betriebspositionen I oder II zu gewährleisten.

Das Werkzeug 11 mit der erfindungsgemäßen Schutzabdeckung 13 kombiniert somit zwei Aufgaben, erstens Lebensmittel während des Mixvorganges zu vermischen (Position I, Fig. 2a) und zweitens während des Zerkleinerns wird die Funktionsweise eine Choppers bzw. Zerkleinerungsvorrichtung (Position II, Fig. 2b) gewährleistet. In beiden Betriebspositionen I und II kann die Schutzabdeckung 13 fluiddicht an den Antriebsschaft 12 fixiert werden.

Die Schutzabdeckung kann aus PP hergestellt werden, jedoch auch weitere Materialien, wie Edelstahl oder andere Kunststoffe sind denkbar. Die Schutzabdeckung 13 kann beispielsweise transparent oder undurchsichtig ausgeführt sein.

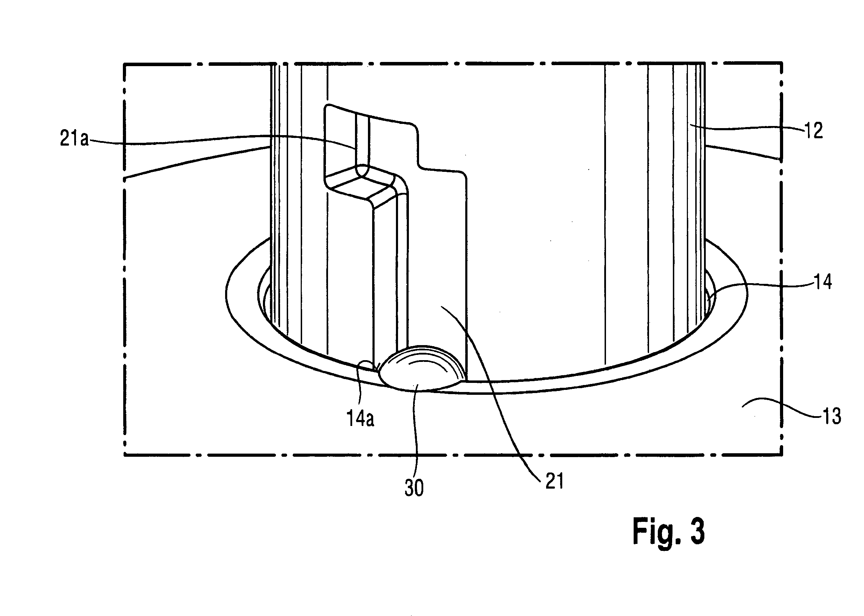

Fig. 3 zeigt eine Detailansicht der Schutzabdeckung im Zusammenspiel mit dem Antriebsschaft 12 des Werkzeugs 11. Die Schutzabdeckung 13 ist mit Hilfe eines Vorsprungs 30 in einer Führungsnut am Antriebsschaft 12 verschiebbar geführt. Der Vorsprung 30 ist gemäß einem möglichen Ausführungsbeispiel integral in der Schutzabdeckung 13 bereitgestellt. So kann die Schutzabdeckung z.B. in einem Spritzgußverfahren aus Kunststoff hergestellt werden.

Der Vorsprung 30 ragt aus dem Umfang 14a der Öffnung 14 heraus und gleitet im Betrieb in der Führungsnut 21 entlang der Achse A.

Die Schutzabdeckung kann in mindestens zwei Betriebspositionen I, II am Antriebsschaft fixiert werden. In dieser Lage ist die Schutzabdeckung 13 starr gehaltert, so dass ein Benutzer gefahrlos das Gerät 10 in Betrieb nehmen kann.

Die Fixierung kann beispielsweise mittels seitlicher Führungsnuten 21, die im Wesentlichen parallel zur Grundfläche 13a der Schutzabdeckung 13 verlaufen. In Fig. 3 ist die seitliche Führungsnut 21 a gemäß der zweiten Betriebsposition gezeigt, in welcher das Handküchengerät, insbesondere der Stabmixer 10, als Zerkleinerer bzw. Chopper eingesetzt werden kann.

Der Benutzer verschiebt die Schutzabdeckung 13 entlang des Antriebsschaftes 12 und dreht diese mittels des Vorsprungs 30 in die seitlichen Führungsnuten ein, so dass die Schutzabdeckung sicher in dieser Betriebslage I, II fixiert wird. Zur besseren Fixierung können mehrere Vorsprünge 30 entlang des Umfangs 14a der Öffnung 14 vorgesehen werden. Dementsprechend sollen ebenfalls analog Führungsnuten 21 und seitliche Führungsnuten 21a am Schaft 12 des Werkzeugs 11 ausgebildet sein.

Auch denkbar ist die Ausbildung mehrere Zwischenpositionen der Schutzabdeckung 13 am Schaft 12. So kann eine mittig am Schaft 12 vorgesehen werden. Durch mehrere seitliche Führungsnuten 21a kann beispielsweise eine beliebig hohe Anzahl an Betriebspositionen am Schaft 12 des Werkzeugs 11 implementiert werden. Dadurch können unterschiedliche Arbeitsbehälter verwendet werden, und die Abdeckung 13 kann immer die optimale Höhe bezüglich des drehenden Messerwerkzeugs 22 am Ende des Antriebsschaftes 12aufweisen.

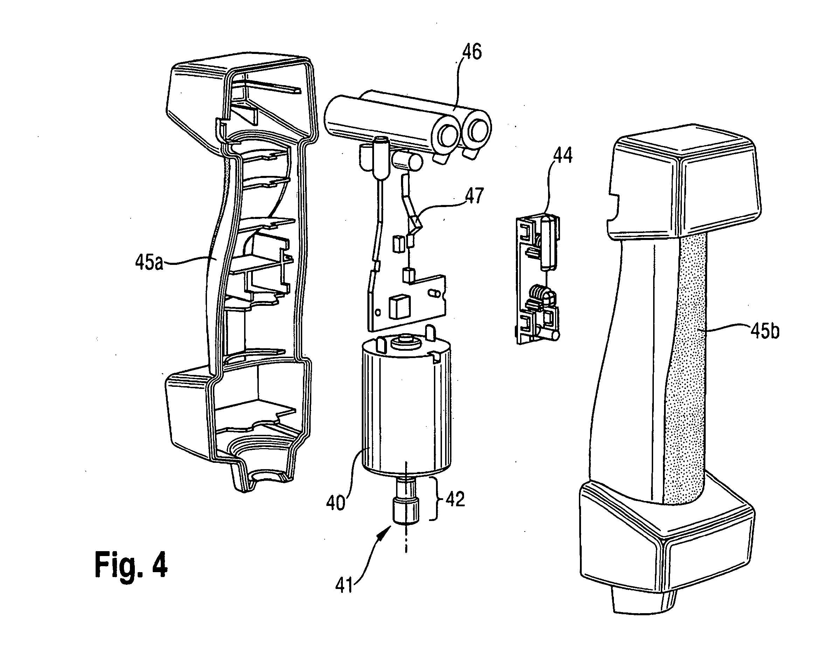

Fig. 4 zeigt eine vereinfachte Explosionsansicht des Hauptkörpers eines Handküchengeräts gemäß einer möglichen Ausführungsform der Erfindung. Der als Griff ausgebildete Hauptkörper weist zwei Halbschalen 45a und 45b auf, die im zusammengebauten Zustand die wichtigsten Funktionskomponenten des Stabmixers 10 aufnehmen. Die Halbschalen 45a und 45b weisen Rippen auf, welche eine geeignete mechanische Stabilität gewährleisten und ferner zur Fixierung aller Komponenten im Hauptkörper geeignet sind.

Der Motor 40 wird mittig im Hauptkörper angeordnet, um eine ausbalancierte Handhabung durch einen Benutzer bereitstellen zu können. Weiter ist eine Steuerplatine 47 und dazu geeignetes Stellgliedermodul 44 zur Betriebssteuerung des Stabmixers vorgesehen. Der Motor 40 weist einen Abtrieb 41 mit einer geeigneten Koppelstelle 42 für das Werkzeug 11 oder für ein Getriebe 60 auf.

Die Halbschalen 45a und 45b können mit Schrauben verbunden werden. Im Inneren der beiden Hälften befinden sich Rippen, die die inneren Teile tragen und positionieren. Der Motor wird von Rippen gehalten, die dessen zylindrischen Flächen nachbilden, und zwei kleine Rippen, die in die Nuten darauf passen, verhindern, dass sich der Motor im Gehäuse bzw. Hauptkörper dreht. Die Steuerplatine 47 wird ebenfalls von den Rippen des Gehäuses getragen. Auf den Rippen können Haken vorgesehen sein, sodass die Steuerplatine festgeklemmt wird. Die Akkus 46 werden ebenfalls von Rippen getragen, sodass sie sich nicht bewegen können.

Die Tasten und ein lichtleitendes Teil werden auf der Tastenhalterung bzw. Stellgliedermodul 47 angebracht, bei der es sich um ein Teil handelt, das durch Rasthaken mit der vorderen Hälfte des Gehäuses verbunden wird. Die Schäfte der Tasten können in die kreuzförmigen Öffnungen der Tastenhalterungen gleiten, sodass Tastenstößel, wenn die Tasten gedrückt werden, die Schalter auf Steuerplatine 47 betätigen können. Die Tasten werden durch die Federn, die sich zwischen den Tasten und der Tastenhalterung befinden (nicht gezeigt), zurückgedrückt. Der Lichtleiter ist ein Teil, das das Ladesignallicht von der Steuerplatine 47 durch eine Öffnung aus dem Gehäuse bzw. Hauptkörper herausleitet. Die Tasten sind bevorzugt aus PE (Polyethylen) und der Lichtleiter ist aus PC (Polycarbonat) hergestellt.

Die beiden Hälften 45a und 45b des Gehäuses können durch 2K-Spritzguss hergestellt werden. Das Grundmaterial ist PP (Polypropylen) und die zweite Komponente besteht aus einem gummiähnlichen Polymer. Die PP-Grundlage bietet eine harte Schale, die die inneren Teile schützt, und die Innenflächen und die Rippen sind ebenfalls aus diesem Material. Die gummiähnliche Komponente befindet sich auf den Außenflächen, wodurch das Gerät leichter wird und bequemer in der Hand gehalten und verwendet werden kann.

Die Öffnungen für die Tasten auf der harten PP-Grundlage werden ebenfalls durch diese Komponente abgedeckt, sodass sie dazu beiträgt, die Tasten zu halten, und verhindert, dass Wasser in das Gehäuse eindringt. Doch dank der Elastizität können die Tasten, die sich darunter befinden, gedrückt werden. Auf den Außenflächen haben die PP-Teile auf den beiden würfelähnlichen Bereichen des Gehäuses eine glänzende Oberfläche und auf den Griffbereichen eine matte Oberfläche.

Mit der Erfindung ist vorteilhaft erreichbar, dass die Nahrungsmittelbearbeitung flexibel und zeiteffizient durchgeführt werden kann. Mit Hilfe des Handküchengeräts kann ein Werkzeug unterschiedliche Aufgaben erfüllen, ohne dass ein Benutzer komplizierte und zeitintensive Handgriffe durchführen muss.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

## Patentansprüche

1. Handküchengerät (1), insbesondere Stabmixer (10), mit mindestens einem Werkzeug (11) zur Nahrungsmittelbearbeitung, wobei das Werkzeug (11) einen Antriebsschaft (12) aufweist, der mit einem Motor (40) des Handküchengeräts wirkverbindbar ist und der eine Antriebswelle aufweist, die den Antrieb des Motors zum unteren Ende des Antriebsschaftes (12) ableitet, wobei am Antriebsschaft (12) eine verschiebbare Schutzabdeckung (13) für das Werkzeug (11) angeordnet ist und die Schutzabdeckung (13) scheibenförmig oder diskusförmig mit einer Öffnung (14) ausgebildet ist, durch welche der Antriebsschaft (12) verläuft, **dadurch gekennzeichnet, dass** die Öffnung (14) der Schutzabdeckung (13) mindestens einen Vorsprung (30) aufweist, wobei der mindestens eine Vorsprung (30) mit einem Führungsmittel (20) des Antriebsschaftes (12) zusammenwirkt.

2. Handküchengerät (1) nach Anspruch 1, **dadurch gekennzeichnet, dass** die Schutzabdeckung (13) entlang einer Achse (A) des Antriebsschaftes (12) verschiebbar angeordnet ist.

3. Handküchengerät (1) nach einem der vorherigen Ansprüche, **dadurch gekennzeichnet, dass** das Führungsmittel (20) des Antriebsschaftes (11) als Führungsnut (21) ausgebildet ist und der Vorsprung (30) als Gleitstück ausgebildet ist.

4. Handküchengerät (1) nach einem der vorherigen Ansprüche, **dadurch gekennzeichnet, dass** die Schutzabdeckung (13) in mindestens, eine Betriebsposition (I, II) entlang des Antriebsschaftes (11) fixierbar ist.

5. Handküchengerät (1) nach einem der vorherigen Ansprüche, **dadurch gekennzeichnet, dass** an der Motorachse des Motors (40) ein Abtrieb (41) ausgebildet ist.

6. Handküchengerät (1) nach einem der vorherigen Ansprüche, **dadurch gekennzeichnet, dass** der Abtrieb (41) mit einer Koppelstelle (42) für das Werkzeug (11) verbindbar ist.

## Claims

1. Hand-held kitchen appliance (1), especially hand blender (10), with at least one tool (11) for food processing, wherein the tool (11) has a drive shank (12) which is able to be operatively connected to a motor (40) of the hand-held kitchen appliance and which has a drive shaft which redirects the drive of the motor to the lower end of the drive shank (12), wherein a movable protective covering (13) for the tool (11) is disposed on the drive shank (12) and the protective cover (13) is embodied in the shape of a plate or a disk with an opening through which the drive shank (12) passes, **characterised in that** the opening (14) of the protective cover (13) has at least one projection (30), wherein the at least one projection (30) interacts with a guide means (20) of the drive shank (12).

2. Hand-held kitchen appliance (1) according to claim 1, **characterised in that** the protective cover (13) is disposed to allow movement along an axis (A) of the drive shank (12).

3. Hand-held kitchen appliance (1) according to one of the preceding claims, **characterised in that** the guide means (20) of the drive shank (11) is embodied as a guide slot (21) and the projection (30) is embodied as a sliding piece.

4. Hand-held kitchen appliance (1) according to one of the preceding claims, **characterised in that** the protective cover (13) is able to be fixed in at least one operating position (I, II) along the drive shank (12).

5. Hand-held kitchen appliance (1) according to one of the preceding claims, **characterised in that** an output (41) is embodied on the motor shaft of the motor (40).

6. Hand-held kitchen appliance (1) according to one of the preceding claims, **characterised in that** the output (41) is able to be connected to a coupling point (42) for the tool (11).

## Revendications

1. Appareil de cuisine portatif (1), en particulier mixeur plongeur (10), doté d'au moins un accessoire (11) de traitement d'aliments, ledit accessoire (11) comprenant une tige d'entraînement (12) pouvant être reliée activement à un moteur (40) de l'appareil de cuisine portatif et comportant un arbre d'entraînement qui dirige l'entraînement du moteur vers l'extrémité inférieure de la tige d'entraînement (12), un recouvrement de protection coulissant (13) de l'accessoire (11) étant monté sur la tige d'entraînement (12), ledit recouvrement de protection (13), en forme de disque, étant réalisé avec une ouverture (14) à travers laquelle passe la tige d'entraînement (12), **caractérisé en ce que** l'ouverture (14) du recouvrement de protection (13) comporte au moins une protubérance (30), ladite au moins une protubérance (30) coopérant avec un moyen de guidage (20) de la tige d'entraînement (12).

2. Appareil de cuisine portatif (1) selon la revendication 1, **caractérisé en ce que** le recouvrement de protection (13) est monté coulissant le long d'un axe (A) de la tige d'entraînement (12).

3. Appareil de cuisine portatif (1) selon l'une des revendications précédentes, **caractérisé en ce que** le moyen de guidage (20) de la tige d'entraînement (11) est réalisé sous la forme d'une rainure de guidage (21) et la protubérance (30) est réalisée sous la forme d'une coulisse.

4. Appareil de cuisine portatif (1) selon l'une des revendications précédentes, **caractérisé en ce que** le recouvrement de protection (13) peut être fixé dans au moins une position de fonctionnement (I, II) le long de la tige d'entraînement (11).

5. Appareil de cuisine portatif (1) selon l'une des revendications précédentes, **caractérisé en ce qu'**un arbre de sortie (41) est formé sur l'axe du moteur (40).

6. Appareil de cuisine portatif (1) selon l'une des revendications précédentes, **caractérisé en ce que** l'arbre de sortie (41) peut être relié à un point de couplage (42) de l'accessoire (11).
